# EUROPEAN PATENT APPLICATION

(11) **EP 4 035 850 A1**
(43) Date of publication of application: **03.08.2022**
(21) Application number: 21154799.7
(22) Date of filing: 02.02.2021
(51) Int. Cl.: B25J 17/02, B25J 15/06, B25J 15/00, B25J 19/00, B25J 13/08, B25J 19/02

(54) **END EFFECTOR FOR PICKING UP OBJECTS**

(71) Applicant: Pick-It nv, 3001 Heverlee (BE)
(72) Inventor: WILLAERT, Bert, 3001 Heverlee (BE); VRANCKEN, Filip, 3545 Loksbergen (BE)
(74) Representative: Office Kirkpatrick

(57) **Abstract**

The invention is related to end effectors for industrial robots used in the industry in order to transport objects from one location to another in the production lines. Particularly, the invention concerns an end effector for a robotic arm comprising a rod mountable onto a robotic arm at one end and at the other end of which a gripper is freely rotable around an axis perpendicular to the axis of the rod. The invention also concerns an articulated robot equipped with an end effector according to the invention and a 3D camera.

## Description

### Field of the invention

The invention is related to end effectors for industrial robots used in the metallurgical industry in order to transport objects from one location to another in the production lines. The invention also concerns an articulated robot equipped with a magnetic end effector according to the invention and a 3D camera.

### Background of the invention

The forging industry is characterized by noisy production lines and heavy shocks. These production lines are also physically demanding and sometimes dangerous for workers. To avoid hard handling work and to increase general efficiency, most of the steps in the production line are handled by robotic arms, when it is technically feasible. At the beginning of the production line, one of the steps consists of transporting cylinders of raw materials (billets) from a bin to a conveyor belt located near the bin for further processing steps. The billets are randomly stored in the bin and it leads to difficult automatization with a robotic arm. Indeed, the end effector must grip the right cylinder at the right time, e.g. the cylinders at the surface first. Moreover the end effector has to drop the cylinder in a specified direction on the conveyor belt independently of the initial position of the cylinder. The raw materials may also have different sizes, an efficient end effector needs therefore to adapt to one cylinder to another. Another difficulty is that the bins are, most of the time, rectangular boxes and the areas located at the inside corners are not easy to reach by a robot.

In order to automatize the step explained above, the applicant developed a specific end effector. This end effector can be mounted on a robotic arm coupled to a 3D camera for autonomous operations.

### Summary of the invention

The invention concerned a end effector for a robotic arm comprising a rod, mountable onto a robotic arm at one end, and at the other end of which a gripper is arranged freely rotable around an axis perpendicular to the axis of the rod.

An end effector is a device mounted at the extremity of a robotic arm. Thanks to this end effector, the robotic arm can interact with the environment and can be operational. There are many types of end effectors in the industry and the end effector of the invention belongs to gripping end effectors. Gripping end effectors (grippers) are used to handle objects during the transport from a point A to a point B. For example, an end effector can be a magnetic gripping end effector which can handle metallic (ferromagnetic) objects thanks to an attractive magnetic force, a vacuum end effector (gripping objects by applying a suction on them), or include any other type of gripper.

A robotic arm designates all types of robotic arms known from the person skilled in the art, e.g. cartesian, articulated, cylindrical, polar or SCARA robotic arm. The robotic arm is standardly controlled by a motion control software.

Preferably, the robotic arm is an articulated robotic arm with six degrees of freedom (abbreviated DOF).

According to the invention, the end effector mainly comprises two elements successively arranged: a rod and a gripper.

The word "rod" is not limiting the invention to an object of circular section but has to be understood in a broader sense including as well any longitudinal piece of rigid material acting as an extension arm for the robotic arm. The rod can be of any section such as for example circular, square or rectangular section. Preferably, it is a rectangular parallelepiped rod. The characteristic "longitudinal" means that the length of the rod is much bigger than the dimensions of the section of the rod. Such a longitudinal shape of the rod allows the end effector to access to every areas of the bin of raw materials, especially to the bottom and in the inside corners of the bin. The axis of the rod is here the longitudinal axis which will also be referred to as the axial axis or z-axis, even if the section of the rod is not circular. When speaking of radial plane, or radial axis, it refers here to directions perpendicular to the longitudinal axis, like x-y axes in a cartesian coordinate system.

Preferably, the length of the rod is selected to be longer than the depth of the bin from which it is intended to pick up objects. This enables to reach the corners of the bin without any shocks between the robotic arm and the bin while using a standard motion control software. Shorter rods can also be used but may require a more complex motion control programming, leading to a more expensive solution.

The rod can be hollow or plain. Preferably, the rod is hollow and allows different elements to be arranged therein, such as cables or secondary mechanical assemblies which will be detailed later.

As explained above, the rod is made of rigid material such as metal, rigid plastic or composite material in order to avoid deformations of the end effector during operations. Preferably the rod is mainly made of steel, other metallic alloys or aluminum.

The rod can be a continuous piece, or an assembly of several elements. The interface between the elements can advantageously allow the implementation of buffer elements imparting a slight flexibility to the rod along the axial and/or radial directions.

The rod can be mounted onto the robotic arm at one of its extremity by screws, bolts, rivets or any other means known from the person skilled in the art. The end effector (comprising the rod and the gripper) and the robotic arm are two separated parts.

The second element of the end effector is a gripper (to be considered as synonyms here). In some embodiments, this gripper is based on attractive magnetic force. Preferably, this force is not permanent and can be switched on or off when it is relevant.

The magnetic gripper preferably has a non-permanent magnetic force, and can be an electromagnetic magnet or a pneumatic/compressed air based magnetic gripper, i.e. that a permanent magnet is displaced within the gripper over compressed air to vary the magnetic force at its surface, close to the objects to grip when necessary. Preferably, compressed air based magnetic gripper is used because the power to volume ratio is higher than for electromagnetic magnets.

The magnet can be a magnet with a single surface of contact or head. Alternatively, the magnetic gripper can be an assembly of several parts arranged in a specific way, for instance aligned or arranged to cooperate with the shape of the objects to pick up. Only one or several parts of the magnetic gripper can be magnetic. Magnetism can be distributed from one part to other parts.

In other embodiments, the gripper is a vacuum gripper. Vacuum is applied to seize an object and stopped to release the object.
In still other embodiments, the gripper can be an articulated gripper or any type of gripper.

The most important characteristic of the present invention is that the gripper is freely rotable around an axis perpendicular to the axis of the rod.

"Freely rotable" means that the position of the gripper relative to the axis is imparted either by gravity or, by an external pressure exerted by an object. For example, when the gripper is pressed against an object to pick up, it rotates so that its surface aligns with the surface of the object. In other words, the motion of the gripper during the gripping phase is not due to electrical motors or compressed air devices but it is only due to pression/contact force induced by the vertical and horizontal displacements of the rod towards the objects.

The axis of the rod corresponds to the longitudinal axis of the rod. For instance, when the rod is a cylinder, the axis of the rod is the virtual axis located at the center of the base and parallel to the height of the cylinder.

The axis of rotation of the gripper is perpendicular to the rod axis, towards the free end of the rod. Preferably, when the rod has a rectangular section, the axis of rotation of the gripper is parallel to two opposite edges of the section.

Preferably, the rod is equipped with a mechanical device able to actively reset the position of the magnet around its rotational axis in a default position. These means of reset allows the magnet to be blocked in a specific position when necessary and therefore to be stable during operation and avoid unwanted swinging of the object to pick up. The default position can be any position suitable for the handling work, advantageously the position desired at the endpoint of the movement of the object, and can be defined by the constructor or the operator. For example, the default position can correspond to the positioning imparted by gravity when the rod is vertical.

The active reset can be operated by springs or any other mechanical device, for instance a three or four-bar linkage coupled to air piston arranged in the rod to apply a multi-point pressure onto a surface of the gripper.

Alternatively or complementary to the active reset, the rotation of the gripper can be limited thanks to mechanical stops. For example, flanges can be arranged on the gripper and stop the rotation of the gripper by hitting the rod.

In one other embodiment, a 3D camera can be fixed directly on the rod in order to scan the bin of raw materials and identify the right cylinder of material to pick. Preferably, a standard low cost 3D camera can be used (i.e. not a high definition camera). The accuracy of such a camera may be between 1 mm and 1 cm, which may result in small positioning errors of the end effector. However, such errors can be mechanically compensated, which is much less expensive than buying a high definition 3D camera.

Indeed, preferably, the rod also comprises mechanical compensation means to allow the end of the rod to have at least one more supplementary DOFs (e.g. along or around the x, y and/or z directions of the rod). This allows to compensate for the inaccuracy of the 3D camera. Such DOFs correspond to displacements of small amplitude, preferably a few cm, i.e. less than 10 cm, along the longitudinal and/or radial axes of the rod, and are useful during the gripping step of the billets by rising the accuracy of the position of the gripper located at the extremity of the rod. The mechanical means to allow these DOFs can be one single device or several devices, arranged for example along the rod.

The gripper can comprise a proximity sensor. This sensor allows to detect whether an object is gripped or not. It can for example be an optical sensor.

In one embodiment of the invention, when it is used to pick up cylindrical ferromagnetic raw materials, like for example billets, the gripper is a magnet which has a global parallelepipedal shape. The surface of contact of the magnet is arranged with a central recess parallel to the long edge of the parallelepiped designed to fit the cylindrical shape of the billets and to strengthen the gripping magnetic force. It also avoids lateral movements of the billets during transportation. Indeed, a magnet with a unique flat surface of contact would lead to a single line of contact with the cylindrical billets, possibly leading to the billet moving on the magnet during transportation. Conversely, the longitudinal recess allows to grip the billet with at least two lines of contact, ensuring a locked positioning. Advantageously, for more efficiency of the gripping and in particular to avoid the hindrance of the neighboring billets, the edges of the magnetic surface of the magnet parallel to the recess can be chamfered. In that specific embodiment, the sensor is preferably located on the magnet and in the recess.

Ferromagnetic objects means objects being ferromagnetic, at least in part.

This application also concerns a method of use of the end effector of the invention to transport objects from a bin, where the objects are stored, to a destination, where the object will be further handled.

The method comprises the steps of:
- scanning the bin with a 3D camera to map the objects to pick up;
- Analyzing the map and selecting an object to pick up;
- moving the end effector to position the gripper against the object to pick-up;
- activating the gripper to grip the selected object;
- moving the end effector with the object towards its destination, and
- releasing the object by deactivating the gripper.

The positioning of the gripper against the object, whatever its orientation or location in the bin, is made possible by the free rotation of the gripper around the axis.

The steps of the method can be repeated until all objects of the bin have been handled.

Advantageously, the step of scanning with the 3D camera for selecting the next object to pick up can be done at the same time as the object is moved. This optimizes the handling time of the objects as image analysis is then performed during displacement of the object and the next object can then be gripped without delay.

Depending on the type of gripper, activating and deactivating the gripper can mean activating and deactivating a magnet, or activating and deactivating vacuum or articulating the gripper to seize of release the object.

Alternatively, the method can also comprise the step of :
- Scanning the bin with the 3D camera to identify a sequence of at least two objects to pick up.

For moving the end effector with the object towards its destination, it is preferable to reset actively the gripper to its default position. This means, the free rotation of the magnet around the axis perpendicular to the rod is hindered. This stabilizes the gripper during transportation, thereby avoiding possible shocks with elements in the environment, and also secures a predictable releasing position at destination, identical for all objects.

A more complete appreciation of the disclosure can be obtained and understood from the following detailed description with the reference to the accompanying drawings, wherein:
Figure 1 is a perspective view of an end effector of the present invention gripping a billet.
Figure 2 is a cross section of the magnetic gripper.
Figure 3 a) and b) are two different views of the active reset mechanism, and
Figure 4 is an illustration of the method of the invention.
Figure 5 is a perspective view of a Y-compensation module installed on an end-effector of the invention.

The below examples illustrate the embodiment where the gripper is a magnetic gripper. A person skilled in the art will understand that the gripper could as well be another type of gripper, like a vacuum gripper or an articulated gripper.

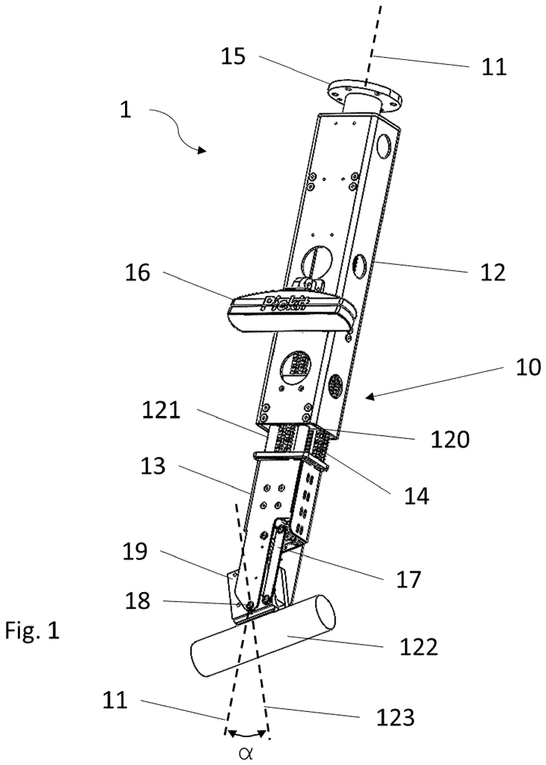

As illustrated in Fig. 1, the end effector 1 of the present invention comprises a longitudinal parallelepipedic rod 10 acting as an extension arm for a robotic arm where it is intended to be fixed on. The longitudinal axis of the rod, called the "rod axis" in this application, corresponds to the virtual axis 11. The rod 10 is divided into two subparts: the body 12 and the head 13 of the rod connected to each other by a compensation module 14, which is detailed below. The rod 10 also comprises means 15 to fix the end effector on a robotic arm. It can be screwed, bolted or riveted.

The body 12 is hollow and houses auxiliary equipment (not represented, like compressed air tubes, electrical cables, etc. The body 12 also comprises different fixation means on its outside surface. A 3D camera 16 is fixed on the body 12.

The head of the rod 13 is hollow as well. The shell of the head 13 houses a mechanism of active reset 17, which will be further detailed below. The extremity of the head of the rod also comprises means 18 to bear a shaft supporting a magnetic gripper 19 which can freely rotate around the shaft. For example, the means 18 is here ball bearings, but it could be any suitable bearings known from the person skilled in the art.

The body 12 and the head 13 are made of metal such as steel, other metallic alloys or aluminum.

Thanks to the elongated shape of the rod 10, the bottom of the bin and the inside corners are easily reached during operations, i.e. without the use of an advanced motion control software and complex moves of the robotic arm.

The body 12 and the head 13 of the rod are linked together with an intermediate mechanism 14 which is a compensation module in both Z and Y directions. This compensation module, in addition to his linkage role, enables the head of the rod to have two more DOFs in Y (radial) and Z, the Z-axis being defined as the direction of the axis of the rod 11 and Y-axis defining an orthogonal cartesian system with Y aligned with the edge 120 of the body of the rod. The compensation module 14 comprises at least one vertical guiding shaft 121 coupled to a return spring allowing an adjustment in the Z-direction of the position of the head of the rod when it comes against an object to pick up. Moreover, the specificity of the compensation mechanism 14 is to subordinate the DOFs in Y-direction to the Z-direction DOF : it is only when the DOF in the Z-direction has been activated that the head of the rod is allowed some flexibility of movement in Y-direction. These supplementary DOFs are limited to small magnitudes and are used to balance the inaccuracy of the vision device when low or normal definition cameras are used. In other words, if the 3D camera mapping leads to inaccuracy of the position and the orientation of the object to grip in the bin, it can lead to a slight misplacement of the head of the rod and the magnetic gripper with respect to the object. Such misplacement can result in pressure forces exerted on the end effector and the object and can cause damages to either element. This is prevented thanks to the compensating mechanism 14. The defined maximum value for each Z and Y-displacements to limit the motion of the head and to allow it to be fully operational are technical specifications that can be selected depending on the size and destination of the end effector, as well as the size and weight of the objects to be handled. This simple compensation mechanism allows the use of a low definition 3D camera thereby undoubtedly reducing the price of the end effector.

In this case, the object to pick up with the magnetic gripper 19 is the metallic billet 122, which is a cylinder of ferromagnetic material.

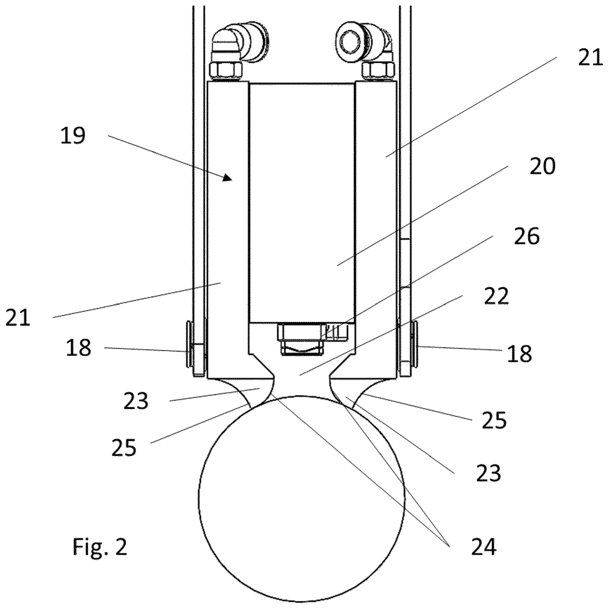

The magnetic gripper 19 is here a compressed air based magnetic gripper (i.e. allowing an intermittent magnetic force depending on the position of a permanent magnet displaced by compressed air within the gripper). It has a specific designed contact surface adapted to cylindrical object of different diameter and is detailed in Fig. 2.

For clarity purposes, a gripper axis 123 is defined as the main axis of the magnetic gripper 19. The axis of the rod 11 forms an angle α with the axis of the magnetic gripper 123. The default is here defined as the position of the magnet corresponding to α = 0°, meaning it is aligned with the rod. In that case, here, the contact surface of the gripper is perpendicular to the rod axis 11.

The magnet 19 is mainly secured to the head 13 with a shaft set up in the bearing means 18 leading to a rotational freedom of the magnet around the axis of the shaft, i.e. perpendicular to the axis of the rod. The shaft can physically extend through the whole magnet or only the connecting extremities can be set up in the bearings (virtual shaft).

The active reset mechanism 17 (partially visible in Fig. 1) is a mechanical device in charge of actively repositioning the magnet in its default position and block it, independently of the motion of the robotic arm. The active reset mechanism 17 is here a double four-bar linkage with return springs coupled to an air piston and is detailed below.

As depicted on Figure 2, the magnetic gripper 19 is symmetrical and formed by a parallelepipedal core 20 sandwiched between two identical flanks 21. The flanks 21 are higher than the core 20 leading to a recess or a groove 22 being formed below the core between the protruding parts of the flanks, which end with a claw partially closing the groove 22. The protruding sections of the flanks 21 each end with a head 23 having a specific design based on facing quarter cylinder shapes with facing curved edges 24 to adapt to cylindrical objects with different diameters and to ensure the proper positioning of the object on the gripper. During operations, the neighboring objects of the object to pick up can hinder the positioning of the gripper, to ensure a fully operational magnetic gripper, the applicant chamfered the lower external edges 25 of the flanks. Indeed, it avoids the hindrance of other billets close to the billet to pick in the bin. It leads to the specific design of the head of the flanks, as shown in Fig. 2.

The three elements (core 20 and flanks 21) are ferro-magnetic and allows the propagation of the magnetic force of the permanent magnet, which is here a pneumatic magnet located inside the core element 20.

The flanks 21 are also designed high enough in order to enable the shaft to pass through the recess between the two ball bearings 18 (in case the shaft physically extends between the bearings; the shaft is not represented here for clarity purpose). It leads to less friction losses and less manufacturing process, as only the flaks have to be perforated, not the core, to let the shaft through.

The depths of the recess also allows the installation therein of a proximity sensor 26 which gives information about the presence of the object or not. Such information is necessary for the control motion software. The sensor could be arranged anywhere else but the recess is definitely the optimal position. The sensor is preferably an optical sensor.

The magnetic gripper is here intended to displace billets and its design is therefore here specifically adapted for this purpose. However, the invention is not limited to this type of magnetic heads, as it can be advantageously adapted to the type of objects to displace.

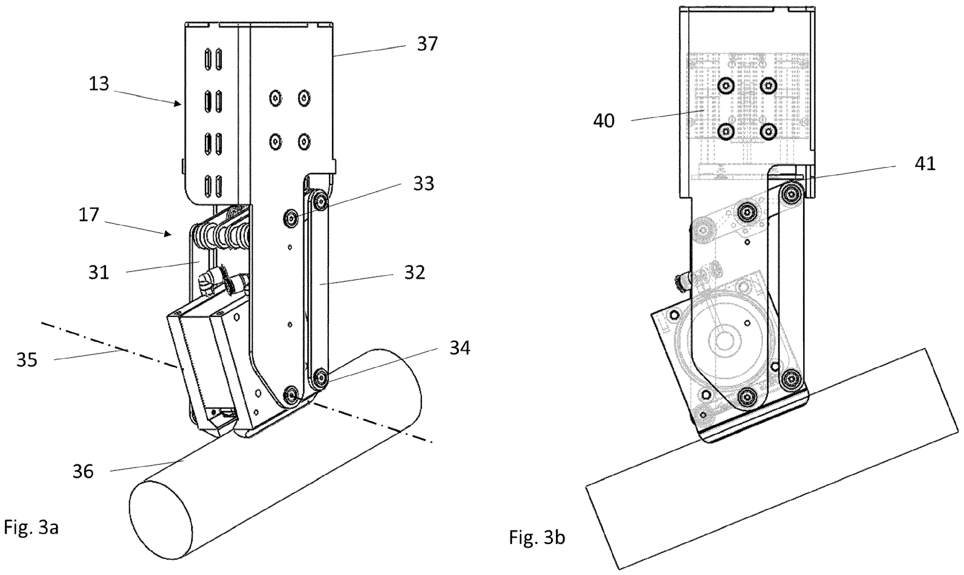

With reference to Figures 3a and 3b, the mechanism 17 in charge of the active reset of the magnet comprises two four-bar linkage 31 and 32 and an air piston 40, depicted shaded in Figure 3b. These linkages are arranged in the head 13 of the end effector of which casing 37 is cut to allow the external bar of each four-bar linkage to be arranged in the plane of said casing 37. Each four-bar linkage is attached to the casing 37 by fixation means 33 (position towards the center of the horizontal bars) and directly on the magnet by fixation means 34, the fixation means 33 and 34 allowing some rotational freedom of the elements they bind relative to each other.
When the magnet comes up to a billet, it needs to adapt to the specific orientation of the billet. This can be achieved because the magnet is free to rotate around the axis 35. During this rotation, the linkages 31 and 32 are mainly free to rotate and/or move accordingly to the motion of the magnet (i.e. when the angle α depicted on Figure 1 varies) . Advantageously, the motion of the linkages can be slightly stressed by return springs installed in the casing 37, concentrically to fixation means 33 (not shown on the figure) in order to smoothen the rotation around axis 35. Alternatively to the return springs, friction bushings can be used. Once the billet 36 is gripped by the magnet (magnet activated), it is free to swing when the robotic arm moves. This is convenient when the billet is lifted up from the bin but can be dangerous when it is further transported towards its destination. To avoid this effect, the air piston 40 (depicted in Figure 3b) is activated and presses on the linkages through the point 41 to adjust and maintain the magnet to its original and default position. Namely, it presses on the highest point of the four-bar systems to align it to the central point of the four-bar system (at the level of fixation means 33, thereby aligning the magnet in parallel until it comes back to its default position

The mechanism 17 is symmetrically designed relative to the axis of the rod, the casing 37 housing the magnetic gripper being designed with an opposite symmetry in order to counterbalance the different stresses during operations.

Figure 3a and 3b show a specific arrangement for a given angle α. However, these figures do not limited the use of the end effector to his arrangement: the active reset mechanism 30 is operational for angles α in a theorical range of [-90, 90°].

A bar-linkage is here disclosed as a reset mechanism, but it does not intend to be limited to this implementation. There are several other possibilities to reach the same effect that a person skilled in the art could contemplate implementing, like a direct pressure on the magnet, springs systems of even magnetic systems.

The various parts of the end effector have been detailed above with specific configurations, but each part can be combined with other parts not specifically detailed in the present application. The invention is not limited to the examples or combination given above.

To be operational, this end effector can be mounted on articulated robotic arms such as well know ABB^{®} or KUKA^{®} robots.

In this specific example, the end effector is used to transport cylinders of raw materials from a bin to a conveyor belt located near the bin. A person skilled in the art can however easily apply the method to the transport of any other shape of raw materials.

The associated method will now be described.

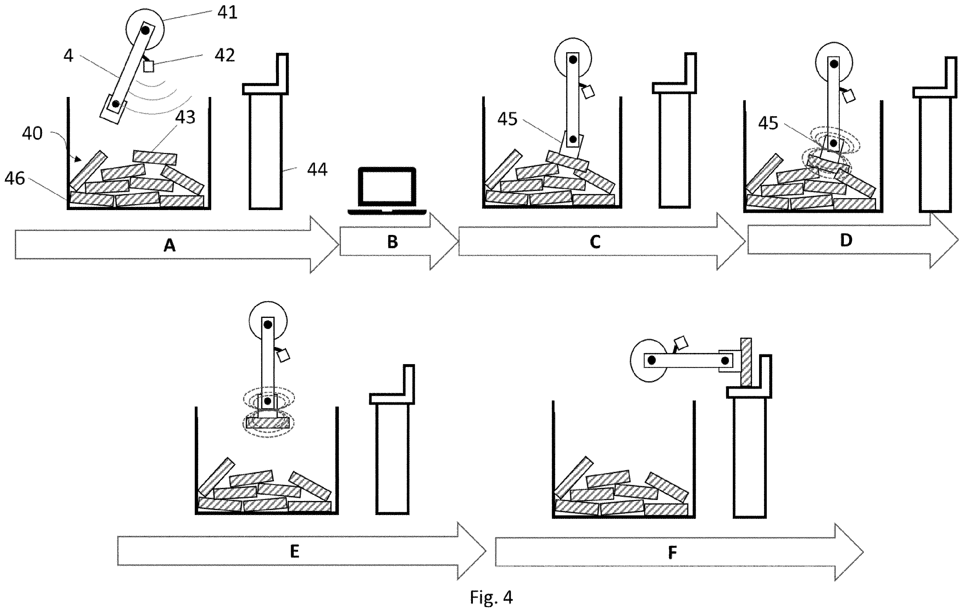

Referring to Figure 4, where the drawn elements are purely illustrative of one possible example beyond the many possible applications of the method, the raw materials 40 here billets, are cylindrical metallic objects randomly stored in a rectangular bin 46.
In order to efficiently transport them from the bin to a conveyor belt 44, the robotic arm (schematically depicted by the cercle 41 here), is equipped with an end effector 4 according to the invention having a magnetic gripper 45 and a 3D camera 42.
In a step A, the arm is placed above the bin (or in any suitable position) such that the 3D camera can scan the bin.
The data from the camera is sent to a computer and in a step B, an adapted program analyzes the data and determines which billet is suitable to be handled next. Thanks to the 3D camera 42, the billet 43 is identified by a recognition software as the billet to be picked up. Once the target-billet is identified, in a step C, a standard motion control software connected to the program commands the moves of the end effector to place the magnetic gripper 45 against the billet 43. Towards the end of this movement, when the head of the magnetic gripper pushes on the billet, a compensation module on the end effector relieves the constraints from the end effector and allows the magnetic gripper to be correctly positioned against the billet: the magnet rotates and lines up with the axis of the billet.
In step D, the magnetic force is therefore "activated" and the billet 43 is gripped to the end effector 4 through the magnetic gripper 45. In step E, the robotic arm moves the end effector: it lifts the billet 45 towards an aera free from obstructions and actively reset the magnet to its default position and blocks it in that position. The billet is blocked and cannot swing around the axis of rotation anymore. The robotic arm transports the billet further towards the conveyor belt 44 and drops it by switching off the magnetic force during the last step F.

For more timing efficiency in the whole process, a sequence of at least two billets can be identified by the 3D camera during step (A). For instance, during the first step (A), the 3D camera can identify billets to pick up successively and therefore can bypass the further scanning steps during the displacement of the last three billets. Alternatively, a new 3D scan is performed while lifting a billet from the bin, so analysis of the image and decision of the next billet to pick can be done during the displacement of the billet.

As it is important to have a small degree of freedom at the gripping end, alternative systems of compensation can be used.

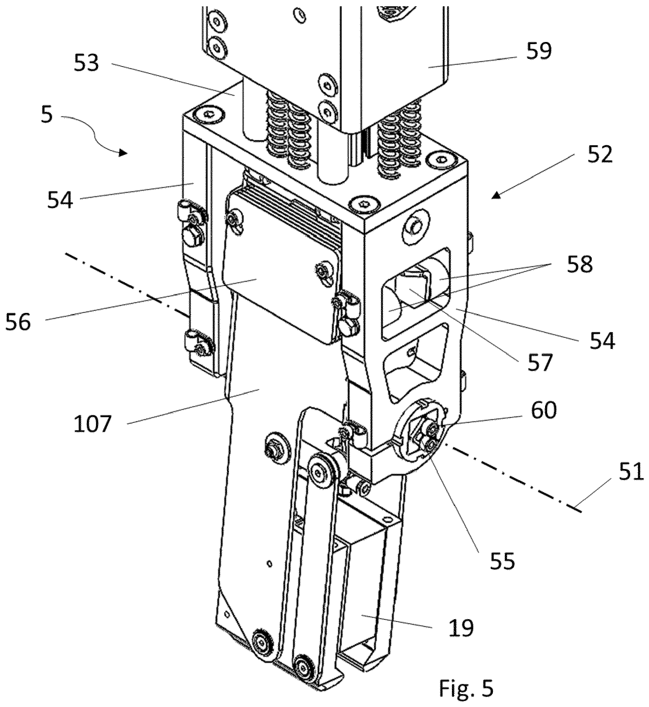

For example, the end-effector can be equipped with a compensation module 5 depicted on Figure 5. This compensation module or "Y-compliance module" enables the head of the end-effector (i.e. the part comprising the active reset mechanism 107 and the magnetic gripper 19) to have an additional DOF around the virtual axis 51 radial to the rod (here perpendicular to the rotation axis of the gripper as defined above). Although the DOF is a rotational DOF, the magnitude of the displacements is so small than it can be approximated by a linear DOF in Y-direction (radial direction), hence the wording "Y-compliance module". As other compensation modules in this document, the compensation module 5 allows the magnetic gripper 19 to move a few millimeters (or centimeters) when approaching an object to pick up and balance the inaccuracy of the vision device when low or normal definition cameras are used.

The compensation module 5 comprises a rigid body 52 with a fixation extremity 53 from which extend two parallel walls 54 between which is arranged a shaft (not visible on the drawing) passing through the mechanism 17. The fixation extremity comprises means to fix the module to the rod while enabling passage for the means of active reset 17 of the magnetic gripper 19 of the end-effector.

The shaft supports the active reset mechanism 17 (to which the magnetic gripper of the end-effector is fastened), opposite to the fixation means of the compensation module, allowing it to rotate around the virtual axis 51 (the pivot axis or shaft axis) by means of bearings fixed into the walls at the points 55. Counterweights 56 are arranged fastened to the head of the end-effector above the shaft fastened so as to have the pivot axis 51 located at its center of gravity. This allows the gripper assembly (the head of the end-effector) to be at the equilibrium state even when the end-effector is moving under an angle towards an object to pick up. Moreover, the springiness of the compensation movement around the pivot axis can be adjusted through the tension into the bushings 60. The combination of the counterweights and the bushings allow the head of the end-effector (the gripper and the active reset mechanism) to stay in the neutral position (i.e. aligned with the rod axis) independent of the orientation of the end-effector, it renders an active locking of the compensation module unnecessary.

The amplitude of the compensation module's rotational motion of the head of the end-effector can be adjusted thanks to a lip 57 arranged on the upper part of said head and extending through a window opened in a wall 54 of the rigid body between mechanical stops 58 fixed on each side of the window. The distance between the lip and the mechanical stops constrains the amplitude of the movement. Indeed, the lip 57 is fixed to the head and moves with the rotational movement of the head. The position of the lip 57 can also be rendered active with springs or pneumatic actuators.

When such a Y-compliance module is used, preferably, a z-compliance 59 module is also arranged on the end effector, at any suitable position. It can be directly fixed on the extremity 53 of the Y-compliance module for instance, as illustrated on figure 5 or anywhere on the rod.

Compensation module 5 has here been illustrated within the context of the invention. However, its use is not limited, and this compensation module can be used in other contexts and can be mounted independently on any relevant end-effectors.

In a more generic way, the y-compliance module can be defined as a lateral (or radial) compensation module comprising a fixation extremity (for fixation to an articulated arm or rod or end effector having a general axis, z-axis) from which extend two parallel segments (parallel to the z-axis) between which is arranged a (virtual) pivot axis supporting a head (gripper), opposite to the fixation extremity of the compensation module, allowing said head to rotate around the pivot axis and wherein the pivot axis is at the center of gravity of the head. Counterweights can be arranged fastened to head above the shaft so as to have the pivot axis defined located at the center of gravity of head. The pivot axis can be a shaft extending between the segments or a virtual axis, the rotation around the axis being enabled by bearings or any other fixation means allowing a rotational movement.
The compensation module can comprise means to limit the rotation around the pivot axis. For example, the head comprises a protrusion and the segments are arranged to serve as blocking means for the protrusion, determining the amplitude of the rotation. The blocking means can be elastic means or mechanical means, or any suitable means.

## Claims

1. An end effector (1) for a robotic arm comprising:
- a rod (10) mountable onto a robotic arm at one end and at the other end of which
- a gripper (19) is freely rotable around an axis perpendicular to the axis of the rod (11).

2. An end effector according to claim 1, further comprising a mechanism (17) to actively reset the gripper to a default position.

3. An end effector according to any preceding claims, wherein a 3D camera (16) is arranged on the rod.

4. An end effector according to any preceding claims, wherein the gripper (19) comprises a proximity sensor (26).

5. An end effector according to any preceding claims, wherein a compensation module (14) is arranged to add at least one degree of freedom to the head of the rod (13).

6. An end effector according to one of claim 1 to 5 wherein the head of the gripper (19) is designed to have at least two lines of contact with objects of cylindrical shape.

7. An end effector according to claim 6, wherein the gripper is a magnetic gripper.

8. A magnetic end effector according to claim 7, wherein the surface of contact of the magnetic gripper is arranged with a central recess parallel to the long edge of the parallelepiped designed to fit the cylindrical shape.

9. An end effector according to claim 5, wherein the compensation module is a radial compensation module (5) comprising a fixation extremity (53) fixed to the rod from which extend two parallel segments (54), parallel to the axis of the rod between which is arranged a pivot axis (51) supporting the gripper (19), opposite to the fixation extremity (53), counterweights (56) being arranged linked to the gripper (19) above the pivot axis so as to have the pivot axis (51) located at the center of gravity of gripper (19) and the counterweights (56).

10. An end effector according to claim 9, wherein the compensation module further comprises means (57) to limit the rotation of the gripper around the pivot axis (51).

11. A method to transport objects from a bin (46) to a destination (44), where the object is handled with the end effector (4) of any of claim 1 to 10, mounted on a robotic arm (41), comprising the step of:
- (A) scanning the bin with a 3D camera (42) to map the objects to pick up ;
- (B) analyzing the map and selecting an object (43) to pick up;
- (C) Moving the end effector to position the gripper (45) against the object to pick-up;
- (D) activating the gripper to grip the selected object ;
- (E) moving the end effector with the object towards its destination, and
- (F) releasing the object by deactivating the gripper.

12. Method according to claim 11, wherein the steps of scanning with the 3D camera and analyzing the map for selecting a further object (43) to pick up is be done at the same time as steps C, D, E and/or F.

13. Method according to claim 11 or 12, wherein, for moving the end effector with the object towards its destination, the gripper is actively reset to its default position.
